(19) Europäisches Patentamt
European Patent Office
Office européen des brevets

(11) EP 3 438 158 B1

(12) **EUROPÄISCHE PATENTSCHRIFT**

(45) Veröffentlichungstag und Bekanntmachung des Hinweises auf die Patenterteilung:
**25.11.2020 Patentblatt 2020/48**

(51) Int Cl.:
***C08G 77/46*** *(2006.01)* ***C08L 83/04*** *(2006.01)*

(21) Anmeldenummer: **17184159.6**

(22) Anmeldetag: **01.08.2017**

# (54) HERSTELLUNG VON SIOC-VERKNÜPFTEN POLYETHERSILOXANEN

PRODUCTION OF SIOC-LINKED SILOXANES

PRODUCTION DE POLYÉTHERSILOXANES PAR UNE LIAISON SIOC

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.02.2019 Patentblatt 2019/06**

(73) Patentinhaber: **Evonik Operations GmbH**
**45128 Essen (DE)**

(72) Erfinder:
- **KNOTT, Wilfried**
  **45355 Essen (DE)**
- **DUDZIK, Horst**
  **45326 Essen (DE)**
- **FIEDEL, Olga**
  **45239 Essen (DE)**
- **FAVRESSE, Philippe**
  **40880 Ratingen (DE)**
- **HESSE, Ute**
  **43557 Essen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A1- 2 138 526**
**US-A- 2 917 480**
**US-A- 3 801 616**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung liegt auf dem Gebiet der Polyethersiloxane. Insbesondere betrifft sie ein Verfahren zur Herstellung von SiOC-verknüpften Polyethersiloxanen ausgehend von Alkoxysiloxanen durch Umesterung mit Polyetherolen in Gegenwart von Zinkacetylacetonat als Katalysator.

Zinkacetylacetonat $Zn(acac)_2$ ist als Katalysator für zahlreiche Reaktionen bekannt.

Die EP 0986527 B1 beschreibt ein Verfahren zur Reduktion von Carbonylverbindungen mit Verbindungen, die silanischen Wasserstoff (SiH) tragen und hierbei speziell die Reduktion von Estern mit Poly(methylhydrogen)siloxan in Gegenwart von Ligand-modifiziertem Zinkacetylacetonat. Abhängig vom gewählten Ligandsystem gelingt die Reduktion des Benzoesäuremethylesters zum Benzylalkohol in nahezu quantitativen Ausbeuten.

Die WO2011/060050 A1 zielt ab auf ein Beschichtungssystem, bestehend aus einem Bindemittel und Partikeln, wobei der Einsatz bestimmter Siloxan-basierter Modifizierungsmittel von zentraler Bedeutung ist. Ein Zugang zu diesen Modifizierungsmitteln stellt die dehydrogenative Verknüpfung von SiH-Gruppen tragenden Siloxanen mit Polyalkylenglykolmonoalkylethern dar, bei der Zinkacetylacetonat als Katalysator fungiert.

Die WO2015/039837 A1 beansprucht ein hydroxylgruppenhaltiges Silikon-Polyester-Acrylat-Bindemittel sowie dessen Herstellung und dessen Verwendung. Dort wird ausgeführt, dass unter anderem Zinkacetylacetonat ein Katalysator ist, der in Anwesenheit von Feuchtigkeit bereits bei Raumtemperatur die Hydrolyse und Kondensation von Silyltrialkoxy-Gruppen fördert und so die Aushärtung des Systems herbeiführt. Sinngemäß nennt auch die EP 2636696 A1 Zinkacetylacetonat als geeigneten Hydrolyse- und Kondensationskatalysator zur Aushärtung von modifizierten Alkoxylierungsprodukten, die eine nichtterminale Alkoxysilylgruppe und mehrere Urethangruppen aufweisen.

Gleichfalls als Härtungskatalysator, jedoch für die Anwendung in Polyester modifizierten Silikonharzen, ist Zinkacetylacetonat in der EP 0638605 A1 genannt.

Üblicherweise werden Umesterungsprozesse an Alkoxyorganosiliziumverbindungen und zwar sowohl im Satzbetrieb als auch kontinuierlich geführt durch Zugabe von Säuren oder Basen katalysiert, wie es zum Beispiel die US 6489500 B2 offenbart.

Ältere Patentschriften wie die US 2917480 und die US 2834748 nennen als zu verwendende Katalysatoren organische Säuren wie Monochloressigsäure, Perfluoroessigsäure oder auch alkalische Verbindungen wie Kaliumsilanolat.

Abseits der Verwendung reiner Säuren oder Basen und der Zielstellung gewidmet ein verbessertes Verfahren für die Umesterung von Alkoxysiliconverbindungen bereitzustellen, offenbart US 3133111 in diesem Zusammenhang als Katalysator die salzartige Kombination bestehend aus den einfachen aliphatischen Säuren mit 1 bis 7 C-Atomen, oder aus den hiervon abgeleiteten chlorierten, oder aber insbesondere aus den hiervon abgeleiteten perfluorierten Säuren mit einer basischen Komponente, die die Alkalimetallhydroxide der Alkalimetalle umfasst, deren Atomzahl größer 11 ist sowie Ammoniumhydroxid, quartäre Alkylammoniumhydroxide, Stickstoff enthaltende organische Basen mit der Maßgabe, dass die in der Salzkombination vertretene Säure in überstöchiometrischer Konzentration vorliegt.

Die US 3801616 zielt ab auf die Herstellung von SiOC-basierten flüssigen Siloxan-Polyoxyalkylen-Blockcopolymeren durch Umesterungsreaktion zwischen Alkoxygruppen aufweisenden Siloxanen und mindestens je eine alkoholische Funktion aufweisenden Polyoxyalkylenen in Gegenwart salzartiger Katalysatoren mit definierter Wasserlöslichkeit und einem in wässriger Lösung definiertem pH-Fenster.

Bei der Herstellung thermisch härtender Silikonharze zur Verwendung als Elektroisolationsmaterial sind in der US 4408031 als Umesterungskatalysatoren Titanatester, Kobaltsalze organischer Säuren oder organische Säuren oder Sulfonsäuren, wie vorzugsweise para-Toluolsulfonsäure oder Benzolsulfonsäure genannt.

Neben den zuvor schon aufgeführten Alkyltitanaten, wie z.B. Butyltitanat, nennt die EP 1136494 A2 auch Zinnverbindungen wie Dibutylzinndilaurat.

Die EP 1174467 B1 beschäftigt sich mit der Herstellung von hitzestabilen, korrosionsinhibierenden Polyorganosiloxanharzen und sieht als einen synthetischen Teilschritt die Umsetzung der am Harz gebundenen SiOR-Gruppen mit einem oder mehreren mehrwertigen Alkoholen vor. Als geeignete Umesterungskatalysatoren sind beispielsweise Metallkatalysatoren auf Basis von zum Beispiel Magnesium, Kobalt, Eisen, Aluminium, Titan, Blei, Zink oder Zinn, beispielsweise in Form ihrer Laurate, Octoate, Acetate, Acetylacetonate, Neodecanoate oder Naphthalate genannt. Ebenfalls sollen Titanester oder Cobaltsalze organischer Säuren oder Sulfonsäuren, wie p-Toluolsulfonsäure oder Benzolsulfonsäure eingesetzt werden. Unter den geeigneten Organozinnkatalysatoren sind beispielsweise Dibutylzinndilaurat, Dibutylzinndioctoat oder Dibutylzinndiacetat genannt. Als besonders geeignete Organotitankatalystatoren sind beispielsweise Tetra(n-butyl)titanat oder Tetra(iso-propyl)titanat angegeben. In den Ausführungsbeispielen dieser Schrift wird jedoch einzig und allein Tetra(n-butyl)titanat zur Umesterung der am Silikonharz gebundenen Ethoxy-Funktionen mit Polyolen wie z.B. Trimethylolpropan verwendet. Mit bescheidenen Umsätzen von 60% wird das Si-gebundene Ethanol freigesetzt. Ob sich die aus der Kombinatorik der genannten Einzelverbindungen ableitenden (Metall)Verbindungen in Gänze überhaupt für die Umesterung Alkoxygruppen tragender Siliziumverbindungen eignen, bleibt anzuzweifeln.

Gestützt wird dieser Zweifel durch ein Vergleichsexperiment (vgl. weiter unter im Beispielteil, Beispiel 11), das die Umsetzung eines $\alpha,\omega$-Diethoxy-potydimethylsiloxans mit einem Polyetheralkohol in Gegenwart von Zinkneodecanoat betrachtet. Die Reaktion verläuft derartig schlecht, dass man bei dem zweiphasig anfallenden Produkt sogar auf eine Analytik verzichten kann.

Festzustellen ist weiter, dass die Umesterungsreaktion an einem hochvernetzten Silikonharz eine technisch niedrige Hürde darstellt, da man selbst bei unglücklicher Auswahl eines im Stand der Technik genannten Katalysators nicht mit Nebenreaktionen wie unerwünschter Äquilibrierung oder Gerüstumlagerung konfrontiert wird.

Viel höher ist hingegen die technische Hürde angesiedelt, die sich aus der reproduzierbar sauberen Herstellung von SiOC-verknüpften Polyethersiloxanen durch Umesterung von Alkoxysiloxanen mit Polyetherolen ergibt, insbesondere, wenn die Zielprodukte als grenzflächenaktive Substanzen Eingang in sehr anspruchsvolle Anwendungen nehmen sollen. Hier sind hohe, wenn nicht gar quantitative Umsätze zwingend erforderlich um den jeweiligen Effekt zuverlässig einzustellen.

Der Zielsetzung verschrieben, die Austauschreaktion von Alkoxygruppen am Silizium zu katalysieren haben Berzate et al. die Reaktion

$$PhSi(OMe)_3 + 3C_7H_{15}OH \rightarrow 3MeOH + PhSi(OC_7H_{15})_3$$

untersucht, die sie unter Lewis-Säure-Katalyse, speziell auch unter Zinkacetylacetonat-Katalyse durchgeführt haben (Latvijas PSR Zinatnu Akademijas Vestis, Kimijas Serija (1975), (2), 186-8). Mit Zinkacetylacetonat kommt die Reaktion selbst in diesem einfachen Reaktionssystem bei nur 61,3% Umsatz zum Erliegen.

Dieses ernüchternde Syntheseergebnis, das an einem einfachen, von hoher Reaktivität des eingesetzten Silankörpers geprägten System gewonnen wurde, zeigt, dass der Stand der Technik in keiner Weise die Möglichkeit in Betracht ziehen würde, Zinkacetylacetonat als Katalysator für die Herstellung chemisch komplexer Systeme effektiv einzusetzen.

Das wird besonders anhand der die Erfindung stützenden Versuche respektive der begleitend durchgeführten Vergleichsversuche deutlich.

Überaschenderweise wurde nun allerdings gefunden, dass sich Zinkacetylacetonat sogar als besonders vorzüglicher Katalysator für die Umesterung von Alkoxysiloxanen mit Polyetherolen und damit für die Herstellung chemisch komplexer Systeme eignet.

Gegenstand dieser Erfindung ist daher ein Verfahren zur Herstellung von SiOC-verknüpften Polyethersiloxanen durch Umesterung von Alkoxysiloxanen mit Polyetherolen in Gegenwart von Zinkacetylacetonat als Katalysator, wobei der kalkulatorische Gesamtwassergehalt der Reaktanden, bestehend aus Alkoxysiloxanen und Polyetherolen $\leq$ 300 Massen-ppm beträgt, wobei zuvor die Bestimmung der individuellen Wassergehalte, vorzugsweise durch Titration nach Karl Fischer, erfolgt.

Die Anteile an Wasser lassen sich zwar durch verschiedene, an sich bekannte Methoden bestimmen. Besonders gut geeignet ist aber die Karl-Fischer-Titration, beispielsweise nach DIN 51777.

"Karl-Fischer-Titration" bezeichnet die dem Fachmann bekannte, von Karl Fischer entwickelte Methode zur quantitativen oxidimetrischen Bestimmung von Wasser. Die Analyse kann volumetrisch und, für kleinere Wassermengen (insbesondere $\leq$ 200 Massen-ppm), vorzugsweise auch coulometrisch erfolgen. Der Titrationsendpunkt gibt sich durch einen Iod-Überschuss zu erkennen, der visuell, photometrisch oder elektrometrisch angezeigt werden kann. All dies ist dem Fachmann wohlbekannt.

Im Beispielteil wird die Wasserbestimmung nach Karl Fischer in Anlehnung an DIN 51777, DGF E-III 10 und DGF C-III 13a genauer beschrieben. Die DGF Norm bezieht sich auf die "DGF-Einheitsmethoden", also das Loseblattwerk "Deutsche Einheitsmethoden zur Untersuchung von Fetten, Fettprodukten, Tensiden und verwandten Stoffen", Auflage 2 einschließlich 22. Akt.-Lfg., ISBN10:3804723470, Wissenschaftliche Verlagsgesellschaft.

"Kalkulatorischer Gesamtwassergehalt" bedeutet, dass der Wassergehalt der Einzelkomponenten, umfassend Alkoxysiloxane und Polyetherole jeweils für die einzelne Komponente gesondert erfasst wird und danach zum kalkulatorischen Gesamtwassergehalt aufaddiert wird. Dieser Wassergehalt betrifft die Situation vor dem Reaktionsstart, welcher durch Temperaturerhöhung und Katalysatorzugabe eingeleitet wird.

Im Rahmen der vorliegenden Erfindung ist es besonders bevorzugt und entspricht somit einer besonders bevorzugten Ausführungsform, wenn der Gesamtwassergehalt der Reaktanden, bestehend aus Alkoxysiloxanen und Polyetherolen $\leq$ 200 Massen-ppm, vorzugsweise $\leq$ 150 Massen-ppm, weiter bevorzugt $\leq$ 100 Massen-ppm, insbesondere $\leq$ 50 Massen-ppm beträgt, wobei die Bestimmung des Wassergehaltes durch Titration nach Karl Fischer erfolgt, insbesondere durch coulometrische Karl Fischer Titration.

Die Vorteile des erfindungsgemäß einzusetzenden Katalysators liegen darin, dass er den Einsatz von Säuren oder Basen entbehrlich macht, die in der betrieblichen Praxis einen erhöhten Sicherheitsaufwand bei ihrer Handhabung aber auch bereits bei der Auswahl geeigneter Behältermaterialien bedingen. Ebenfalls macht der erfindungsgemäße Katalysator die sonst übliche Neutralisation von Säuren oder Basen nach beendeter Reaktion entbehrlich und vermeidet

auch den mit Aufwand verbundenen Filtrationsschritt zur Abtrennung des Salzes.

Weitere unerwünschte Effekte, die aus der Verwendung starker Säuren als Umesterungskatalysatoren erwachsen, resultieren aus der starken Dunkelverfärbung der Produkte sowie aus deren nachträglicher Äquilibrierung. Das Vergleichsbeispiel (Beispiel 7, vgl. Beispielteil weiter unten) verdeutlicht, dass man in einem Stoffsystem bestehend aus einem $\alpha,\omega$-Diethoxypolydimethylsiloxan und einem Polyetherol in Gegenwart einer katalytischen Menge an Trifluormethansulfonsäure (0,1 Gew.-% bezogen auf die Gesamtmasse der Reaktanden) zwar zu quantitativen Umsätzen gelangt, dass das isolierte Finalprodukt jedoch dunkelbraun verfärbt ist und zudem beachtliche Mengen an zyklischen Polydimethylsiloxanen ($D_4$ und $D_5$) enthält. Diese Qualitätsdefizite sind produktseitig in keiner Weise akzeptabel.

Der erfindungsgemäß einzusetzende Katalysator besitzt im Vergleich mit zinnorganischen Umesterungskatalysatoren ein weniger kritisches toxikologisches Profil. Im Vergleich zu den sonst auch vielfach eingesetzten, hydrolyseempfindlichen Titanat-Katalysatoren besitzt Zinkacetylacetonat den Vorteil der hydrolytischen Unempfindlichkeit, das heißt, $Zn(acac)_2$ kann auch ohne Inertisierung in gewöhnlicher Atmosphäre portioniert, dosiert und umgefüllt werden.

Insbesondere eignet sich Zinkacetylacetonat als Katalysator für die Umesterungsreaktion von Systemen bestehend aus Alkoxysiloxan und Polyetherol, die Eingang nehmen in anspruchsvolle Anwendungen wie z.B. Lackadditive. Diese Additive zeigen in empfindlichen Überzugssystemen praktisch keinerlei Fehlertoleranz und sind somit sensibler Indikator für prozessual bedingte Abweichungen von der chemischen Natur des Wirkstoffes.

Überraschenderweise wurde im Rahmen dieser Erfindung festgestellt, dass sich nicht nur Polyetherole für die Umesterungsreaktion eignen, die aus der Alkoxylierungsreaktion gesättigter Startalkohole hervorgegangen sind, sondern z.B. auch diejenigen, die sich aus der Alkoxylierung ungesättigter Startalkohole, wie z.B. Allylalkohol herleiten.

Dieser Befund ist insofern speziell für SiOC-verknüpfte Silikonpolyether-Copolymere als Additive in Beschichtungssystemen von Bedeutung, da er den Einbau terminal ungesättigter Gruppen gestattet, die ihrerseits zum Beispiel in Pigment gefüllten Lack- und Bindemittelsystemen eine dispersionsstabilisierende Wirkung entfalten. Entsprechend ist die Verwendung der nach erfindungsgemäßen Verfahren hergestellten, SiOC-verknüpften Polyethersiloxane, deren Polyetherteil sich aus der Alkoxylierung ungesättigter Startalkohole, bevorzugt von Allylalkohol, herleitet, als Entschäumer und/oder Entlüfter sowie als Entschäumer- und/oder Entlüfter-Komponente in Lack- und Bindemittelsystemen ein weiterer Gegenstand der Erfindung.

Erfindungsgemäß als Umesterungskatalysator einzusetzendes Zinkacetylacetonat gestattet schon unter moderaten Bedingungen den nahezu quantitativen Austausch der am Silikongerüst gebundenen Alkoxygruppen gegen Polyetherole, ohne dass Nebenreaktionen wie Äquilibrierung oder Gerüstumlagerung des eingesetzten Silikonkörpers auftreten. Insbesondere eignet sich die hochauflösende $^{29}$Si-NMR-Spektroskopie zum Auffinden derartiger unerwünschter Nebenreaktionen.

Versuchsreihen unterstreichen zudem die zuverlässige Reproduzierbarkeit der durch die Verwendung des erfindungsgemäßen Katalysators induzierten Umesterungsreaktionen, so dass er sich bereits hierdurch für die betriebliche Praxis qualifiziert.

Zeichnet sich der erfindungsgemäße Zinkacetylacetonat-Katalysator selbst zwar auch durch seine gute hydrolytische Stabilität aus, so ist in der Umesterungsreaktion vorzugsweise auf möglichst sorgfältige Einhaltung systemischer Wasserfreiheit zu achten, das heißt, sowohl das eingesetzte Alkoxygruppen aufweisende Siloxan als auch eingesetztes Polyetherol, sowie gegebenenfalls eingesetzte Lösungsmittel sind vorzugsweise möglichst wasserfrei einzusetzen und/oder geeigneten Trocknungsverfahren zu unterziehen.

Der Gesamtwassergehalt der Reaktanden, bestehend aus Alkoxysiloxanen und Polyetherolen, beträgt $\leq$ 300 Massen-ppm, vorteilhafterweise $\leq$ 200 Massen-ppm, vorzugsweise $\leq$ 150 Massen-ppm, weiter bevorzugt $\leq$ 100 Massen-ppm, insbesondere $\leq$ 50 Massen-ppm beträgt, wobei die Bestimmung des Wassergehaltes durch Titration nach Karl Fischer erfolgt.

Die Erzielung der angestrebten systemischen Wasserfreiheit bewerkstelligt der Fachmann über die gebräuchlichen Verfahren, wie z.B. den Einsatz von gebräuchlichen Trockenmitteln (wie z.B. Natriumsulfat, Calciumoxid, etc.).

Im Rahmen der vorliegenden Erfindung haben sich für die Herstellung der angestrebten Wasserfreiheit insbesondere die Azeotroptrocknung und der Stripprozess bewährt.

Demnach kommt für die Trocknung der eingesetzten Reaktionsgemische vorzugsweise die Azeotroptrocknung in Frage, bei der das zu trocknende Polyetherol und/oder Alkoxysiloxan mit einer ausreichenden Menge eines niedrig siedenden Lösungsmittels beaufschlagt wird, das mit dem aus dem Polyetherol und/oder Alkoxysiloxan stammenden Wasser ein destillativ zu entfernendes Azeotrop bildet.

Eine weitere bevorzugte Option zur Trocknung des bei der Umesterungsreaktion eingesetzten Reaktionsgemisches lässt sich über den Stripprozess realisieren, und zwar zum Beispiel dadurch, dass man durch das vorzugsweise erhitzte (z.B. auf 140°C) und mit einem Hilfsvakuum (z.B. 1 mbar) beaufschlagte Stoffsystem einen Inertgasstrom (vorzugsweise für eine Zeit von etwa 2 Stunden) durchleitet. Im Sinne einer produktschonenden Trocknung (Vermeidung oxidativer Prozesse) sind dabei Stickstoff oder Argon als einzusetzende Inertgase bevorzugt. Dieser Strippvorgang führt zu einer im Sinne der Erfindung besonders intensiven Trocknung und stellt ein bevorzugtes Trocknungsverfahren dar. Am Ende der Trocknungsphase bricht man im Rahmen einer besonders bevorzugten Ausführungsform noch in der Hitze

das angelegte Hilfsvakuum durch die massive Beaufschlagung mit einem Inertgas, versetzt danach die Reaktionsmatrix mit einer katalytischen Menge an Zinkacetylacetonat, legt wieder ein Hilfsvakuum an und leitet im Verlauf (z.B. von 5 Stunden) erneut einen Strom Inertgas durch die Reaktionsmatrix, um das aus dem Alkoxysiloxan stammende Alkanol herauszutreiben.

Der Vergleichsversuch (Beispiel 4) unterstreicht eindrucksvoll diesen Aspekt des erfindungsgemäß beanspruchten Verfahrens. Vor der Reaktion mit einem $\alpha,\omega$-Diethoxypolydimethylsiloxan wurde ein nicht getrocknetes, Allylalkohol-gestartetes Polyetherol eingesetzt. In diesem Fall führt die Reaktion unter Verwendung des erfindungsgemäß beanspruchten Zinkacetylacetonats lediglich zu einem stark trüben Produkt, auf dessen Analytik verzichtet wurde.

Vorzugsweise wird in der erfindungsgemäßen Umesterungsreaktion das Polyetherol in Mengen von bevorzugt jeweils 0,8 bis 2,0 OH-Äquivalenten, besonders bevorzugt 0,8 bis 1,3 OH-Äquivalenten, bezogen auf jede am Silikongerüst gebundene Alkoxygruppe eingesetzt. Dies entspricht einer bevorzugten Ausführungsform der Erfindung.

Gemäß einer bevorzugten Ausführungsform der Erfindung wird die erfindungsgemäße Umesterung der Alkoxysiloxane ohne Einsatz von Lösungsmitteln durchgeführt. Im Rahmen dieser Ausführungsform werden insbesondere vorgetrocknete Edukte eingesetzt.

In einer anderen bevorzugten Ausführungsform des erfindungsgemäßen Verfahrens wird die Umesterungsreaktion in einem unter Reaktionsbedingungen inerten Lösungsmittel durchgeführt. Besonders bevorzugte Lösungsmittel sind Toluol und reinen oder als Isomerengemisch vorliegenden Xylole. Vorzugsweise führt man die Umesterungsreaktion in demjenigen Lösungsmittel durch, mit dessen Hilfe man zuvor die optionale azeotrope Trocknung einer oder mehrerer Edukte oder Systemkomponenten durchgeführt hat. Zur Sicherstellung der erfindungsgemäß angestrebten systemischen Wasserfreiheit kann man beispielsweise die bevorzugt eingesetzten Lösungsmittel auch optional einer sehr effektiven Vortrocknung zum Beispiel mit Natrium/Benzophenon sowie anschließender Destillation unter Inertgasbeaufschlagung unterziehen.

Der Gesamtwassergehalt der optionalen Lösungsmittel sollte vorteilhafterweise $\leq$ 50 Massen-ppm, vorzugsweise $\leq$ 25 Massen-ppm, besonders bevorzugt $\leq$ 10 Massen-ppm betragen, wobei die Bestimmung des Wassergehaltes vorzugsweise durch eine coulometrische Titration nach Karl Fischer erfolgt.

Lösungsmittel werden bevorzugt in Mengen von 5- bis 35 Gew.-%, vorzugsweise 10 bis 35 Gew.-%, bezogen auf die Masse der Reaktionsmatrix eingesetzt.

Bei Normaldruck (1013,25 hPa) wird die erfindungsgemäße Umesterungsreaktion in einem Temperaturbereich durchgeführt, der durch den Siedepunkt eines optional gewählten Lösemittels nach oben begrenzt ist. Erfindungsgemäß bevorzugt werden Umesterungstemperaturen zwischen 110 und 150°C gewählt. Dies entspricht einer bevorzugten Ausführungsform der Erfindung.

Bevorzugt wird Zinkacetylacetonat in Mengen von 0,05 bis 1,0 Gewichtsprozent, weiter bevorzugt 0,07 bis 0,8 Gewichtsprozent bezogen auf die Masse der Reaktionsmatrix bestehend aus Polyetherol und Alkoxysilan eingesetzt.

Bevorzugt wird im Rahmen der Erfindung wasserfreies Zinkacetylacetonat eingesetzt. Erfindungsgemäß einzusetzendes, wasserfreies Zinkacetylacetonat kann zum Beispiel von TCI Deutschland GmbH bezogen werden. Sollen eventuell aus anderen Quellen stammende, wasserhaltige Zinkacetylacetonat-Vorläuferkomplexe für das erfindungsgemäß beanspruchte Verfahren eingesetzt werden, so gilt die für den Einsatz von Polyetherol, Alkoxysiloxan und gegebenenfalls Lösungsmittel erörterte Forderung nach weitgehender Wasserfreiheit entsprechend, das heißt, vorzugsweise sollten diese Katalysatoren vor ihrer Verwendung dann noch geeignet getrocknet werden (z.B. auch durch azeotrope Trocknung). Die Präsenz von am Zinkacetylacetonat gebundenem Kristallwasser inhibiert dessen erfindungsgemäße Wirksamkeit nicht prinzipiell jedoch dahingehend, dass die damit katalysierten Umesterungsreaktionen verzögert ablaufen.

Die erfindungsgemäßen Beispiele 1, 2 und 3 unterstreichen das zuvor Gesagte. Der im erfindungsgemäßen Beispiel 1 eingesetzte Zinkacetylacetonat-Katalysator besitzt einen Wassergehalt von 0,4 Gew.-% und führt nach zweistündiger Umesterungsreaktion zu quantitativem Umsatz, während die in Beispielen 2 und 3 eingesetzten $Zn(acac)_2$-Katalysatoren mit individuellen Wassergehalten von 2,0 Gew.-% respektive 7,5 Gew.-% nach vergleichbarer Reaktionszeit etwas geringere Umsetzungsgrade von 94% beziehungsweise 88 % erreichen.

Im Sinne einer bevorzugten Umesterungsreaktion, die vorteilhafterweise zügig und vollständig verläuft, sollte erfindungsgemäß eingesetztes Zinkacetylacetonat vorzugsweise Wassergehalte kleiner 7,5 Gew.-%, bevorzugt kleiner 5 Gew.-% und ganz besonders bevorzugt $\leq$ 2 Gew.-% aufweisen.

In bevorzugt einsetzbaren Zinkacetylacetonat-Hydrat-Komplexen der allgemeinen Formel:

$$(C_5H_7O_2)_2Zn \text{ x } H_2O$$

sind die potentiellen Wassergehalte vorzugsweise x $\leq$ 1,27, bevorzugt x $\leq$ 0,77 und ganz besonders bevorzugt x $\leq$ 0,3. Die Bestimmung des komplexgebundenen Wassers erfolgt nach der Methode gemäß Karl Fischer, vorzugsweise in Anlehnung an DIN 51777, DGF E-III 10 und DGF C-III 13a wie im Beispielteil beschrieben.

Erfindungsgemäß bevorzugt einsetzbare Alkoxysiloxane sind gewählt aus den Verbindungen der Formel (I)

bis Formel (V), wobei der Einsatz der Alkoxysiloxane gemäß Formel (I) und/oder Formel (II) besonders bevorzugt ist.

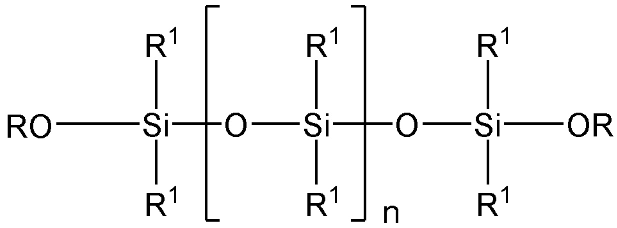

**Formel (I)**

mit $R^1$ gleich Alkyl- und/ oder Aralkyl- und / oder aromatischer Rest umfassend 1 bis 10 C-Atome,

R gleich Alkylrest umfassend 1 bis 8 C-Atome und

mit $1 \leq n \leq 250$

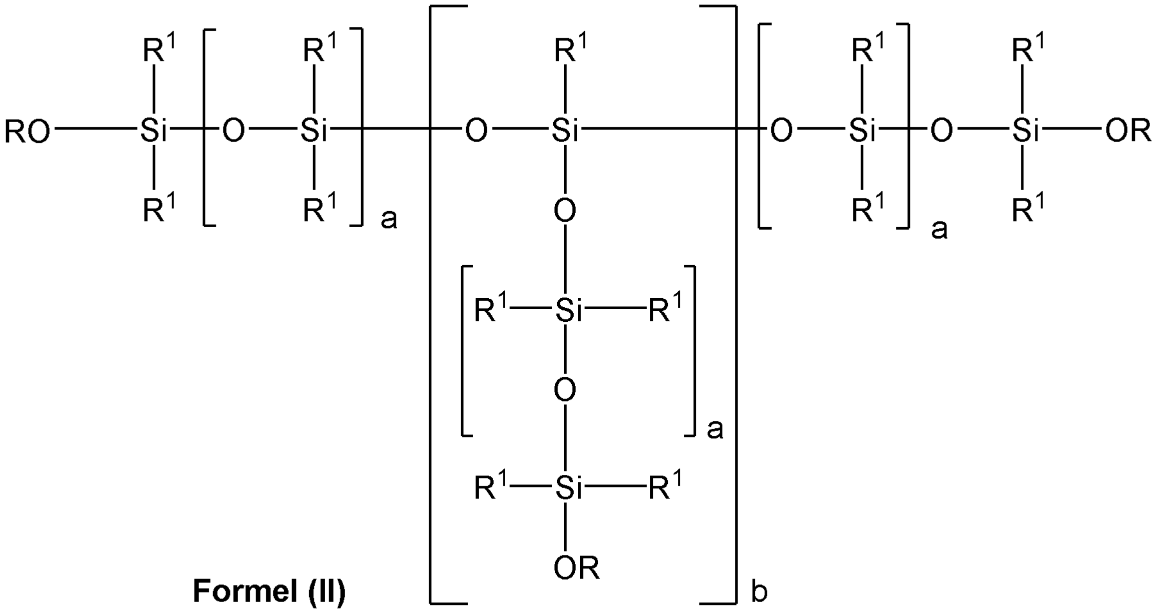

**Formel (II)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $1 \leq a \leq 60$ und
mit $0 < b \leq 10$

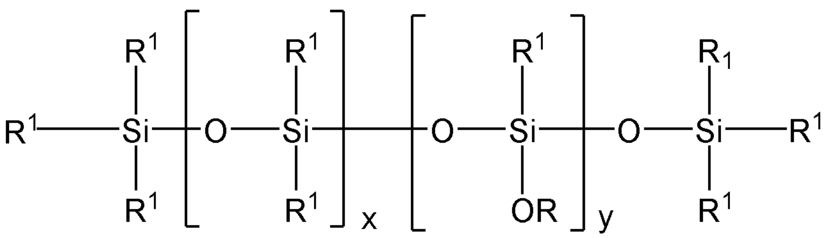

**Formel (III)**

mit $R^1$ gleich Alkyl- und/ oder Aralkyl- und / oder aromatischer Rest umfassend 1 bis 10 C-Atome,

R gleich Alkylrest umfassend 1 bis 8 C-Atome und
mit $0 \leq x \leq 250$ und
mit $1 \leq y \leq 50$

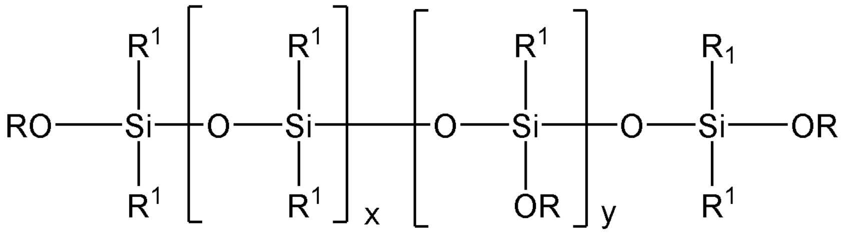

**Formel (IV)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $0 \leq x \leq 250$ und
$1 \leq y \leq 50$

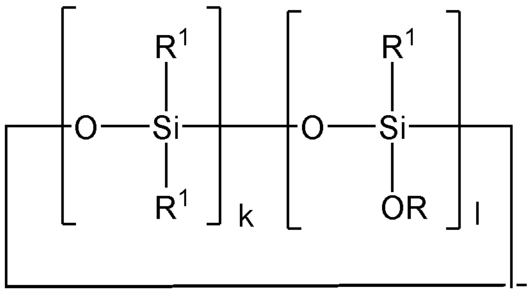

**Formel (V)**

mit $R^1$ gleich Alkyl- und/ oder Aralkyl- und / oder aromatischer Rest umfassend 1 bis 10 C-Atome,
R gleich Alkylrest umfassend 1 bis 8 C-Atome und
mit $4 \leq (k + l) \leq 5$ und
$l \geq 1$

Die erfindungsgemäß einsetzbaren Polyetherole sind vorzugsweise solche der Formel (VI)

$$A[-O-(CH_2-CHR'-O-)_m-(CH_2-CH_2-O-)_n-(CH_2-CH(CH_3)-O-)_o-Z]_a \qquad (VI)$$

mit

A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,

R' unabhängig voneinander eine gesättigte Alkylgruppe mit 2-18 C-Atomen ist oder ein aromatischer Rest, respektive bevorzugt eine Ethylgruppe oder ein Phenylrest,

Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder

der Rest einer organischen Säure der Formel -C(=O)-ZE, wobei ZE ein organischer Rest, bevorzugt ein linearer oder verzweigter, gesättigter oder olefinisch ungesättigter Kohlenwasserstoffrest mit 1 bis 17 C-Atomen, bevorzugt

eine Methylgruppe ist, oder ein aromatischer Kohlenwasserstoffrest mit 6 bis 20 C-Atomen, bevorzugt ein Phenylrest ist, oder

der Rest der Formel -C(=O)-O-ZC ist, wobei ZC ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,

m gleich 0 bis zu 50, bevorzugt 0 bis zu 30, besonders bevorzugt 0 bis zu 20 ist

n gleich 0 bis zu 250, bevorzugt 3 bis zu 220, besonders bevorzugt 5 bis zu 200 ist

o gleich 0 bis zu 250, bevorzugt 3 bis zu 220, besonders bevorzugt 5 bis zu 200 ist

a gleich 1 bis zu 8, bevorzugt größer 1 bis zu 6, besonders bevorzugt 1, 2, 3 oder 4,

mit der Maßgabe, dass die Summe aus m, n und o gleich oder größer als 1 ist,

eingesetzt. Vorzugsweise werden Verbindungen der Formel (VI) verwendet, die ausschließlich Wasserstoffatome, Sauerstoffatome und Kohlenstoffatome aufweisen.

Die hier wiedergegebenen Indexzahlen und die Wertbereiche der angegebenen Indizes können als Mittelwerte (Gewichtsmittel) der möglichen statistischen Verteilung der tatsächlichen vorhandenen Strukturen und/oder deren Mischungen verstanden werden. Dies gilt auch für als solche an sich exakt wiedergegebene Strukturformeln, wie beispielsweise für Formel (VI).

Die mit m, n und o bezeichneten Einheiten können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Unter dem Rest A werden im Rahmen der vorliegenden Erfindung vorzugsweise Reste von Substanzen verstanden, die den Anfang der herzustellenden Verbindung der Formeln (IV) bilden, die durch die Anlagerung von Alkylenoxiden erhalten wird. Die Startverbindung ist vorzugsweise ausgewählt aus der Gruppe der Alkohole, Polyetherole oder Phenole. Bevorzugt wird als Startverbindung enthaltend die Gruppe A ein ein- oder mehrwertiger Polyetheralkohol und/oder ein- oder mehrwertiger Alkohol, oder deren beliebige Mischungen verwendet. Für den Fall, dass mehrere Startverbindungen A als Gemisch verwendet wurden, kann der Index a auch einer statistischen Verteilung unterliegen. Z kann darüber hinaus auch der Rest einer Startverbindung Z-OH sein.

Als Monomere in der Alkoxylierungsreaktion werden bevorzugt Ethylenoxid, Propylenoxid, Butylenoxid und/oder Styroloxid eingesetzt sowie beliebige Mischungen dieser Epoxide. Die unterschiedlichen Monomere können in reiner Form oder gemischt eingesetzt werden. Auch kann die Dosierung eines weiteren Epoxides zu einem bereits in der Reaktionsmischung vorliegenden Epoxides kontinuierlich über die Zeit erfolgen, so dass ein zunehmender Konzentrationsgradient des kontinuierlich zugegebenen Epoxides entsteht. Die entstehenden Polyoxyalkylene unterliegen damit einer statistischen Verteilung im Endprodukt, wobei Beschränkungen durch die Dosierung bestimmt werden können. Im hier genannten Fall der kontinuierlichen Zugabe eines weiteren Epoxides zu einem bereits in der Reaktionsmischung vorliegenden Epoxides ist dann über die Kettenlänge ein Strukturgradient zu erwarten. Die Zusammenhänge zwischen Dosierung und Produktstruktur sind dem Fachmann bekannt.

Bevorzugt werden in dem erfindungsgemäßen Verfahren als Verbindungen der Verbindungsklasse II solche eingesetzt, die eine gewichtsmittlere Molmasse von 76 bis 10.000 g/mol, bevorzugt von 100 bis 8.000 g/mol und besonders bevorzugt von 200 bis 6.000 g/mol aufweisen.

Als Verbindungen der Verbindungsklasse II können bevorzugt solche Verbindungen eingesetzt werden, die aus einer Verbindung der Formel (VII)

$$A[-OH]a \qquad (VII)$$

hervorgegangen sind, wobei der Rest A sich aus Verbindungen ableitet ausgewählt aus der Gruppe der ein- oder mehrwertigen monomeren, oligomeren oder polymeren Alkohole, Phenole, Kohlenhydrate oder Kohlenhydratderivate, wobei besonders bevorzugt solche Verbindungen der Formel (VI) eingesetzt werden, bei denen sich der Rest A von

einem oder mehreren Alkoholen aus der Gruppe von Butanol, 1-Hexenol, Octanol, Dodecanol, Stearylalkohol, Vinyloxybutanol, 2-Ethylhexanol, Cyclohexanol, Benzylalkohol, Ethylenglykol, Propylenglykol, Di-, Tri-oder Polyethylenglykol, 1,2-Propylenglykol, Di- und Polypropylenglykol, 1,4-Butandiol, 1,6-Hexandiol, Trimethylolpropan, Glycerin, Pentaerythrit, Sorbit, Allylalkohol, Vinylalkohol oder von auf Naturstoffen basierenden, Hydroxylgruppen tragenden Verbindungen ableitet.

Besonders bevorzugt werden als Verbindungen der Verbindungsklasse II solche eingesetzt, die bei einem Druck von 101325 Pa und einer Temperatur von 23 °C flüssig vorliegen. Unter diesen sind Butyldiglykol, Dipropylenglykol und Propylenglykol ganz besonders bevorzugt.

Erfindungsgemäß als Polyetherole einsetzbare Verbindungen der Formel (II) und Verfahren zu deren Herstellung werden z. B. in EP 0075703, US 3775452 und EP 1031603 beschrieben. Geeignete Verfahren bedienen sich z.B. basischer Katalysatoren wie z.B. der Alkalihydroxide und der Alkalimethylate. Besonders verbreitet und seit vielen Jahren bekannt ist der Einsatz von KOH. Typischerweise wird ein meist niedermolekularer, dass bedeutet, mit einem Molekulargewicht von kleiner als 200 g/mol, hydroxyfunktioneller Starter wie Butanol, Allylalkohol, Propylenglykol oder Glycerin in Gegenwart des alkalischen Katalysators mit einem Alkylenoxid wie Ethylenoxid, Propylenoxid, Butylenoxid oder einem Gemisch verschiedener Alkylenoxide zu einem Polyoxyalkylenpolyether umgesetzt. Die stark alkalischen Reaktionsbedingungen bei dieser sogenannten Living-Polymerisation fördern verschiedene Nebenreaktionen. Die Verbindungen der Formeln (II) können auch durch Doppelmetallcyanid-Katalyse hergestellt werden. Durch Doppelmetallcyanid-Katalyse hergestellte Polyether haben in der Regel einen besonders niedrigen Gehalt an ungesättigten Endgruppen von kleiner oder gleich 0,02 Milliäquivalenten pro Gramm Polyether-Verbindung (meq/g), bevorzugt kleiner oder gleich 0,015 meq/g, besonders bevorzugt kleiner oder gleich 0,01 meq/g (Bestimmungsmethode ASTM D2849-69), enthalten deutlich weniger Monole und haben in der Regel eine geringe Polydispersität von weniger als 1,5. Die Polydispersität (PD) kann nach einer dem Fachmann an sich bekannten Methode ermittelt werden, indem durch Gelpermeationschromatographie (GPC) sowohl das zahlenmittlere Molekulargewicht (Mn) wie auch das gewichtsmittlere Molekulargewicht (Mw) bestimmt werden. Die Polydispersität ergibt sich als PD = Mw/Mn. Die Herstellung derartiger Polyether wird z. B. in der US-A 5158922 und der EP-A 0654302 beschrieben.

Unabhängig vom Herstellungsweg sind Verbindungen der Formel (VI) bevorzugt geeignet, die vorzugsweise eine Polydispersität Mw/Mn von 1,0 bis 1,5 aufweisen, bevorzugt mit einer Polydispersität von 1,0 bis 1,3.

Abhängig vom Alkylenoxid-Terminus können die erfindungsgemäß einzusetzenden Polyetherole eine primäre oder sekundäre OH-Funktion besitzen. Unter dem Aspekt der später erzielten hydrolytischen Beständigkeit der gewonnenen SiOC-verknüpften Polyethersiloxane ist im Rahmen der erfinderischen Lehre der Einsatz von solchen Polyetherolen bevorzugt, die eine sekundäre Alkoholfunktion aufweisen.

Die folgenden Beispiele dienen dem Fachmann allein zur Erläuterung dieser Erfindung und stellen keinerlei Beschränkung des beanspruchten Verfahrens dar. Die erfindungsgemäße Bestimmung der Wassergehalte erfolgt grundsätzlich mit der Karl-Fischer-Methode in Anlehnung an DIN 51777, DGF E-III 10 und DGF C-III 13a, und zwar insbesondere wie im Beispielteil ausführlich beschrieben. Die $^{29}$Si-NMR-Spektroskopie diente in allen Beispielen der Reaktionsverfolgung im Hinblick auf die Vollständigkeit der Umesterungsreaktion.

## Beispiele

Der kalkulatorische Gesamtwassergehalt der Reaktanden, bestehend aus Alkoxysiloxanen und Polyetherolen, lag in den erfindungsgemäßen Beispielen vor Zugabe des Zinkacetylacetonats jeweils unter 300 Massen-ppm, wobei zuvor die Bestimmung der individuellen Wassergehalte durch Titration nach Karl Fischer erfolgte.

## Wasserbestimmung nach Karl Fischer

In Anlehnung an DIN 51777, DGF E-III 10 und DGF C-III 13a

Der Wassergehalt ist die nach der folgenden Methode aus dem lodverbrauch errechnete Wassermenge. Die Probe wird in Gegenwart von Methanol mit einer Lösung, die Schwefeldioxid und Iod enthält, titriert. Da Schwefeldioxid und Iod nur in Gegenwart von Wasser zu äquivalenten Mengen Schwefeltrioxid und lodwasserstoff reagieren, kann aus dem lodverbrauch der Wassergehalt in Gewichts-Prozenten berechnet werden.

$$J_2 + SO_2 + H_2O = 2\ HJ + SO_3$$

Alle Reagenzien, wenn nicht anders erwähnt, haben die Reinheit: z.A.

Karl Fischer Lösung : Hydranal Composite 5 , Riedel de Haen; 34805
Methanol z.A.;
Chloroform z.A.;
Karl Fischer Titrierautomat ; (z.B. Metrohm; KF-Titrino 701 oder 758)

Titrierstand; Metrohm.
Wechseleinheit 20 ml mit Keramikhahn
Magnetrührstäbchen, 25mm; z.B. Metrohm.
Doppel-Pt-Elektrode; Metrohm.
Analysenwaage; z.B. Sartorius AC210S
Trockenröhrchen mit aktivierten Molekularsieben ; Metrohm.
Die Molekularsiebe sollten bei jedem Wechsel der Titrationslösung gewechselt werden. Die Regenerierung der Molekularsiebe erfolgt im Trockenschrank bei 180 - 240°C über 48 Stunden.

Durchführung

Die Probe ist durch gründliches Verrühren zu homogenisieren.

In einem Titriergefäß werden Methanol oder Methanol / Chloroform (1:1) vorgelegt (Füllhöhe 1/3 bis ¼ des Gefäßes) und mit Composite 5 austitriert. Eine geeignete Einwaage der zu bestimmenden Probe wird über eine Analysenwaage direkt oder mit einer Einmalspritze über Differenzwägung in das Titriergefäß eingewogen. Man titriert bis zum elektrometrischen Endpunkt.

Auswertung

$$\frac{V \times F}{10 \times E} = \text{Wassergehalt [Gew.-\%]}$$

V = Verbrauch Composite 5 Lösung (ml)

F = Faktor der Composite 5 Lösung

E = Einwaage Probe (g)

**Beispiel 1 (erfindungsgemäß)**

In einem 500-ml-Vierhalsrundkolben mit KPG-Rührer, Innenthermometer, Gaseinleitungsrohr sowie aufgesetzter Destillationsbrücke wurden 60,0 g (0,05 mol) eines α,ω-Diethoxypolydimethylsiloxans zusammen mit einer äquivalenten Menge (bezogen. auf Ethoxy-Gruppen) eines Butanol-gestarteten Polyetherols (Propylenoxid-Anteil von 100%) mit einer Molmasse von 1870 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,17 g festen Zinkacetylacetonats (Wassergehalt im Katalysator betrug 0,4 Gew.-%) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man bei quantitativem Alkoxy-Umsatz ($^{29}$Si-NMR-Spektroskopie) ein leicht trübes, SiOC-verknüpftes Polyethersiloxan.

**Beispiel 2 (erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines α,ω-Diethoxypolydimethylsiloxans zusammen mit einer äquivalenten Menge (bezogen auf Ethoxy-Gruppen) eines Allylalkohol-gestarteten Polyetherols (Propylenoxid-Anteil von 100%) mit einer Molmasse von 501 g/ mol (Molmasse bestimmt nach OH-Zahl) unter Rühren und Anlegen eines Ölpumpenvakuums von 1 mbar für 2 Stunden auf 130°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,14 g festen Zinkacetylacetonats (Wassergehalt im Katalysator betrug 2,0 Gew.-%) ein. Die Zugabe erfolgte bei 130°C und die Temperatur wurde entsprechend gehalten.

Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man bei einem mittels $^{29}$Si-NMR-Spektroskopie bestimmten Alkoxy-Umsatz von 94 % ein leicht trübes, SiOC-verknüpftes Polyethersiloxan.

**Beispiel 3 (erfindungsgemäß)**

In Analogie zu Beispiel 2 wurden in einem 500-ml-Vierhalsrundkolben mit KPG-Rührer, Innenthermometer, Gaseinleitungsrohr sowie aufgesetzter Destillationsbrücke 100,0 g (0,058 mol) eines $\alpha,\omega$-Diethoxypolydimethylsiloxans zusammen mit einer äquivalenten Menge (bez. auf Ethoxy-Gruppen) eines Allylalkohol-gestarteten Polyetherols (Polypropylenoxid-Anteil von 100%) mit einer Molmasse von 501 g/ mol (Molmasse bestimmt nach OH-Zahl) unter Rühren und Anlegen eines Ölpumpenvakuums von 1 mbar für 2 Stunden auf 130°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,14 g festen Zinkacetylacetonathydrats (Wassergehalt im Katalysator betrug 7,5 Gew.-%) ein. Die Zugabe erfolgte bei 130°C und die Temperatur wurde entsprechend gehalten.

Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man ein trübes Produkt, das gemäß $^{29}$Si-NMR- Spektroskopie einen Alkoxy-Umsatz von 88 % aufwies.

**Beispiel 4 (nicht erfindungsgemäß)**

In Analogie zu Beispiel 2 wurden in einem 500-ml-Vierhalsrundkolben mit KPG-Rührer, Innenthermometer, Gaseinleitungsrohr sowie aufgesetzter Destillationsbrücke 100,0 g (0,103 mol) eines $\alpha,\omega$-Diethoxypolydimethylsiloxans zusammen mit einer äquivalenten Menge (bez. auf Ethoxy-Gruppen) eines Allylalkohol-gestarteten Polyetherols (Polypropylenoxyd-Anteil von 100%) mit einer Molmasse von 501 g/ mol (Molmasse bestimmt nach OH-Zahl, Wassergehalt betrug 0,2 %) vorgelegt und unter Rühren auf 130°C erhitzt.

Sobald die Reaktionstemperatur erreicht war, wurden 0,14 g festen Zinkacetylacetonats (Wassergehalt 2,0 %) eingetragen und das Reaktionsgemisch unter Rühren und Anlegen eines Ölpumpenvakuums von 1 mbar für 5 Stunden auf 130°C erhitzt. Die Temperatur wurde entsprechend gehalten.

Dabei wurde mit Hilfe des Gaseinleitungsrohrs ein Argonstrom von etwa 3 l/Stunde durch die Reaktionsmischung geleitet. Nach Erkalten des Reaktionsansatzes und dem Aufheben des Hilfsvakuums durch Argoneinleitung isolierte man ein zweiphasiges Produkt, so dass auf die Bestimmung des Umsatzes mittels $^{29}$Si-NMR- Spektroskopie verzichtet wurde.

**Beispiel 5 (erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypolydimethylsiloxans zusammen mit einer äquivalenten Menge (bez. auf die Ethoxy-Gruppen) Allylalkohol-gestarteten Polyetherols (Ethylenoxid-Anteil von 100%) mit einer Molmasse von 387 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,13 g festen Zinkacetylacetonats (Wassergehalt im Katalysator betrug 2,0 %) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde für einen Zeitraum von 5 Stunden durch die Reaktionsmischung geleitet.

Nach Erkalten des Reaktionsansatzes und erneutem Aufheben des Hilfsvakuums durch Argoneinleitung isolierte man bei einem mittels $^{29}$Si-NMR-Spektroskopie bestimmten Alkoxy-Umsatz von 99 % ein leicht trübes, leicht gelbes SiOC-verknüpftes Polyethersiloxan.

**Beispiel 6 (erfindungsgemäß)**

In einem 500-ml-Vierhalsrundkolben mit KPG-Rührer, Innenthermometer, Gaseinleitungsrohr sowie aufgesetzter Destillationsbrücke wurden 60,0 g (0,065 mol) eines einfach verzweigten Triethoxypolydimethylsiloxans zusammen mit einer äquimolaren Menge (bez. auf Ethoxy-Gruppen) eines Allylalkohol-gestarteten Polyetherols (Propylenoxid-Anteil von 80%, Ethylenoxid-Anteil von 20%) mit einer Molmasse von 500 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,14g (0,09 Gew.-%) festen Zinkacetylacetonats (Wassergehalt im Katalysator betrug 2,0 %) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde für einen Zeitraum von 8 Stunden durch die Reaktionsmischung geleitet.

Nach Erkalten des Reaktionsansatzes und erneutem Aufheben des Hilfsvakuums durch Argoneinleitung isolierte man bei einem Alkoxy-Umsatz von 99 % ein leicht trübes, leicht gelbes SiOC-verknüpftes Polyethersiloxan, das die angestrebte Zielstruktur zuweist. Die Ermittlung des Umsatzes erfolgte mittels $^{29}$Si-NMR-Spektroskopie.

**Beispiel 7 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 142,1 g (0,119 mol) eines $\alpha,\omega$-Diethoxypolydimethylsiloxans zusammen mit einer äquimolaren Menge (bez. auf Ethoxy-Gruppen) eines Butanol-gestarteten Polyetherols (80% Propylenoxid-Anteil, 20% Ethylenoxid-Anteil) mit einer Molmasse von 484 g/ mol (Molmasse betimmt nach OH-Zahl) unter Rühren und Anlegen eines Ölpumpenvakuums von 1 mbar für 2 Stunden auf 10°C erhitzt, wobei mit Hilfe des Gaseinleitungsrohrs ein Argonstrom von etwa 3 l/Stunde durch die Eduktmischung geleitet wurde.

Man ließ auf 100°C abkühlen und brach das Hilfsvakuum durch das Anlegen eines massiven Argonstroms und gab unter Inertisierung mit Hilfe einer Hamilton-Spritze (0,15 ml = 0,1 Gew.-%) Trifluormethansulfonsäure in die so vorgetrocknete, erhitzte Reaktionsmatrix.

Bei 100°C Innentemperatur und unter ständigem Rühren wurde erneut ein Hilfsvakuum von 250 mbar angelegt und ein Argonstrom von etwa 3 l/Stunde für einen Zeitraum von 9 Stunden durch die Reaktionsmischung geleitet.

Zur Neutralisation der Trifluormethansulfonsäure wurden unter Rühren 1,88 g $Na_2CO_3 \cdot H_2O$ sowie 3,5 g $NaHCO_3$ hinzugegeben. Man ließ 2 Stunden reagieren, trennte die Salze durch Filtration ab und destillierte das Filtrat 2 Stunden lang bei 130°C und einem Druck von 1 mbar um Siloxanzyklen ($D_4$/$D_5$) zu entfernen.

Isoliert wurde ein klares, jedoch braun-schwarz verfärbtes Material, das gemäß $^{29}$Si-NMR- Spektroskopie quantitativen Alkoxy-Umsatz aufweist.

**Beispiel 8 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypolydimethylsiloxans zusammen mit einer äquimolaren Menge (bez. auf Ethoxy-Gruppen) eines Butanol-gestarteten Polyetherols (Propylenoxid-Anteil von 100%) mit einer Molmasse von 1870 g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,48 g Titan(IV)butoxids (Fa. Fluka) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

**Beispiel 9 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypolydimethylsiloxans zusammen mit einer äquimolaren Menge (bez. auf Ethoxy-Gruppen) eines Butanol-gestarteten Polyetherols (Propylenoxid-Anteil von 80%, Ethylenoxid-Anteil von 20%) mit einer Molmasse von 484 g/ mol (Molmasse betimmt nach OH-Zahl) unter Rühren und Anlegen eines Ölpumpenvakuums von 1 mbar für 2 Stunden auf 140°C erhitzt, wobei mit Hilfe des Gaseinleitungsrohrs

ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,199 g festen Zirconium(IV)acetylacetonats (Sigma-Aldrich) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

**Beispiel 10 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 100,0 g (0,103 mol) eines $\alpha,\omega$-Diethoxypolydimethylsiloxans zusammen mit einer äquimolaren Menge (bez. auf Ethoxy-Gruppen) eines Butanol-gestarteten Polyetherols (Propylenoxid-Anteil von 80%, Ethylenoxid-Anteil von 20%) mit einer Molmasse von 484 g/ mol (Molmasse betimmt nach OH-Zahl) unter Rühren und Anlegen eines Ölpumpenvakuums von 1 mbar für 2 Stunden auf 130°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 3,99 g Zirconium(IV)acetylacetonat-Lösung (5 %-ig in THF) ein. Die Zugabe erfolgte bei 130°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

**Beispiel 11 (nicht erfindungsgemäß)**

In einem 500-ml-Vierhalsrundkolben mit KPG-Rührer, Innenthermometer, Gaseinleitungsrohr sowie aufgesetzter Destillationsbrücke wurden 60,0 g (0,05 mol) eines $\alpha,\omega$-Diethoxypolydimethylsiloxans zusammen mit einer äquimolaren Menge (bez. auf Ethoxy-Gruppen) eines Allylalkohol-gestarteten Polyetherols (Propylenoxid-Anteil von 80%, Ethylenoxid-Anteil von 20%) mit einer Molmasse von 501g/ mol (Molmasse bestimmt nach OH-Zahl) unter Rühren und Anlegen eines Ölpumpenvakuums von 1 mbar für 2 Stunden auf 140°C erhitzt, wobei mit Hilfe des Gaseinleitungsrohrs ein Argonstrom von etwa 3 l/Stunde durch die Eduktmischung geleitet wurde.

Man brach das Hilfsvakuum durch das Anlegen eines massiven Argonstroms und trug unter Inertisierung in die so vorgetrocknete, erhitzte Reaktionsmatrix 0,11 g Zinkneodecanoats (TIB KAT 616) ein. Die Zugabe erfolgte bei 140°C und die Temperatur wurde entsprechend gehalten.

Erneut wurde ein Hilfsvakuum von 1 mbar angelegt und ein Argonstrom von etwa 3 l/Stunde durch die Reaktionsmischung geleitet. Nach 5 Stunden Reaktionszeit wurde ein heterogenes zweiphasiges Produkt erhalten, sodass auf die Analytik verzichtet wurde.

## Patentansprüche

1. Verfahren zur Herstellung von SiOC-verknüpften Polyethersiloxanen durch Umesterung von Alkoxysiloxanen mit Polyetherolen in Gegenwart von Zinkacetylacetonat als Katalysator, wobei der kalkulatorische Gesamtwassergehalt der Reaktanden, bestehend aus Alkoxysiloxanen und Polyetherolen $\leq$ 300 Massen-ppm, vorteilhafterweise $\leq$ 200 Massen-ppm, vorzugsweise $\leq$ 150 Massen-ppm, weiter bevorzugt $\leq$ 100 Massen-ppm, insbesondere $\leq$ 50 Massen-ppm beträgt, wobei zuvor die Bestimmung der individuellen Wassergehalte, vorzugsweise durch Titration nach Karl Fischer erfolgt.

2. Verfahren nach Anspruch 1, **dadurch gekennzeichnet, dass** der eingesetzte Zinkacetylacetonat-Katalysator der Formel

$$(C_5H_7O_2)_2Zn \times H_2O$$

mit x $\leq$ 1,27, bevorzugt mit x $\leq$ 0,77 und besonders bevorzugt mit x $\leq$ 0,3, genügt.

3. Verfahren nach Anspruch 1 oder 2, **dadurch gekennzeichnet, dass** das Zinkacetylacetonat in Mengen von 0,05 bis 1,0 Gewichtsprozent, bevorzugt 0,07 bis 0,8 Gewichtsprozent bezogen auf die Masse der Reaktionsmatrix bestehend aus Polyetherol und Alkoxysiloxan eingesetzt wird.

4. Verfahren nach zumindest einem der Ansprüche 1 bis 3, **dadurch gekennzeichnet, dass** das Polyetherol in Mengen von bevorzugt jeweils 0,8 bis 2,0 OH-Äquivalenten, besonders bevorzugt 0,8 bis 1,3 OH-Äquivalenten , bezogen auf jede am Silikongerüst gebundene Alkoxygruppe, eingesetzt wird.

5. Verfahren nach zumindest einem der Ansprüche 1 bis 4, **dadurch gekennzeichnet, dass** die Alkoxysiloxane zumindest einer der Formeln (I) bis (V) genügen:

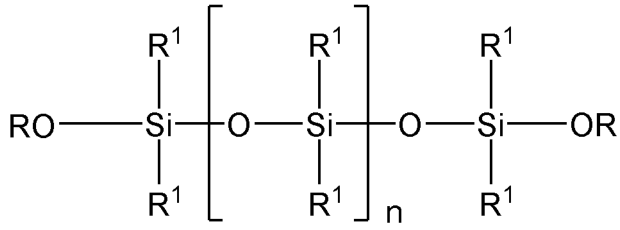

**Formel (I)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $1 \leq n \leq 250$

und/ oder

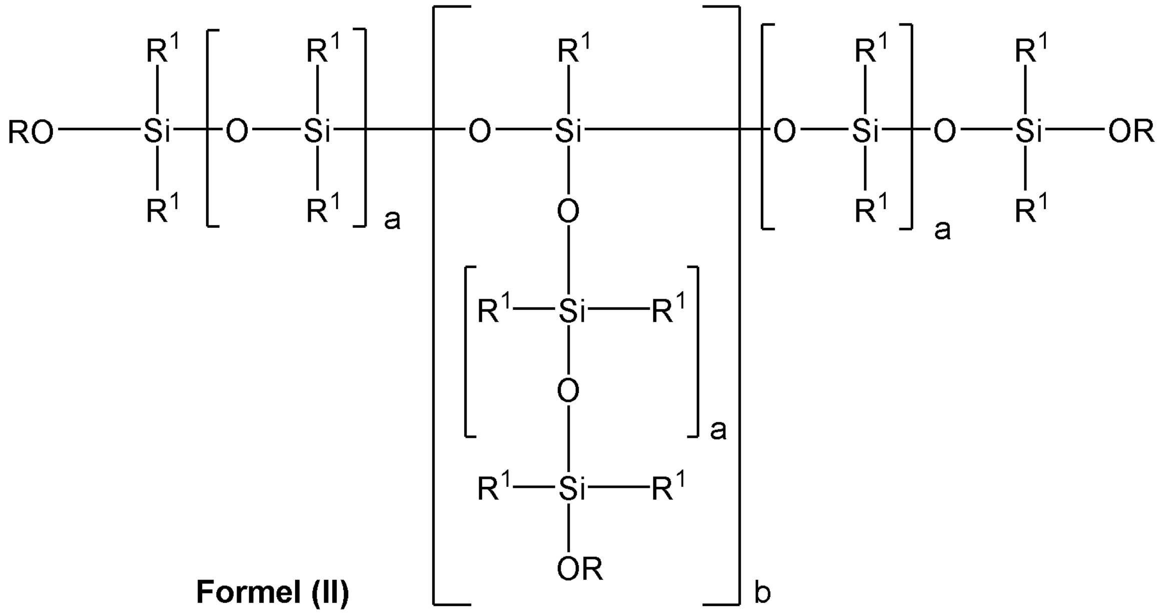

**Formel (II)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $1 \leq a \leq 60$ und
mit $0 < b \leq 10$

und/ oder

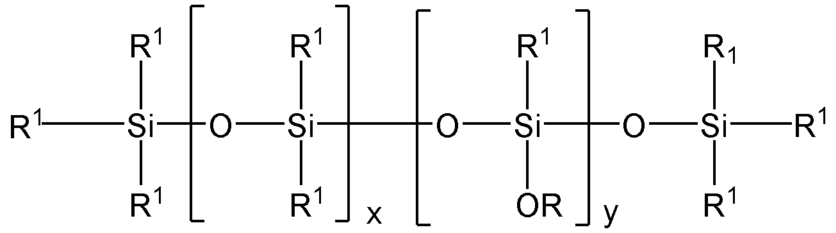

**Formel (III)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $0 \leq x \leq 250$ und
mit $1 \leq y \leq 50$

und/ oder

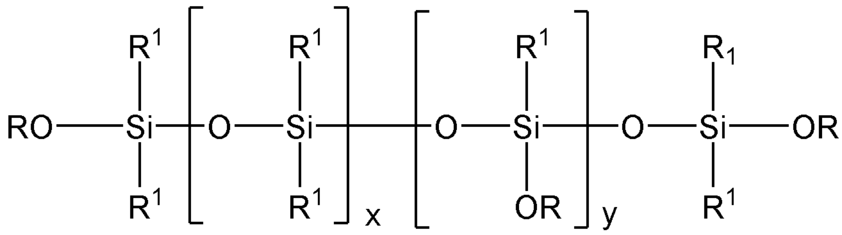

**Formel (IV)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $0 \leq x \leq 250$ und
$1 \leq y \leq 50$

und/ oder

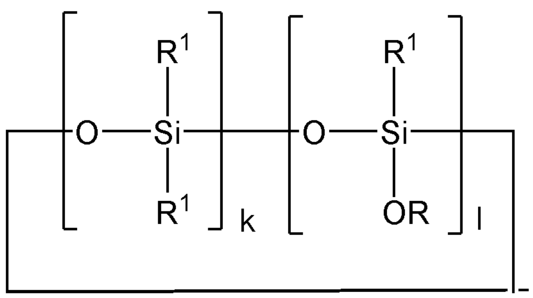

**Formel (V)**

mit $R^1$ gleich Alkyl- und/ oder Aralkyl- und / oder aromatischer Rest, umfassend 1 bis 10 C-Atome,
R gleich Alkylrest, umfassend 1 bis 8 C-Atome und
mit $4 \leq (k + l) \leq 5$ und
$l \geq 1$

6. Verfahren nach zumindest einem der Ansprüche 1 bis 5, **dadurch gekennzeichnet, dass** die Alkoxysiloxane bevorzugt Verbindungen der Formel (I) und/oder Formel (II) sind.

7. Verfahren nach zumindest einem der Ansprüche 1 bis 6, **dadurch gekennzeichnet, dass** die eingesetzten Polyetherole vorzugsweise solche der Formel (VI)

$$A[-O-(CH_2-CHR'-O-)_m-(CH_2-CH_2-O-)_n-(CH_2-CH(CH_3)-O-)_o-Z]_a \qquad (VI)$$

mit

A entweder Wasserstoff oder ein mindestens ein Kohlenstoffatom aufweisender gesättigter oder ungesättigter organischer Rest, bevorzugt ein mindestens ein Kohlenstoffatom aufweisender organischer Rest einer organischen Startverbindung zur Bereitung der Verbindung, besonders bevorzugt eine Methyl-, Ethyl-, Propyl-, Butyl-, Vinyl- oder Allylgruppe ist,
R' unabhängig voneinander eine gesättigte Alkylgruppe mit 2-18 C-Atomen ist oder ein aromatischer Rest, respektive bevorzugt eine Ethylgruppe oder ein Phenylrest,
Z entweder Wasserstoff, ein linearer oder verzweigter, gesättigter oder ungesättigter Kohlenwasserstoffrest mit 1-18 C-Atomen, bevorzugt eine Methyl-, Ethyl-, Propyl-, Butyl-, Vinyl- oder Allylgruppe ist, oder
der Rest einer organischen Säure der Formel -C(=O)-ZE, wobei ZE ein organischer Rest, bevorzugt ein linearer oder verzweigter, gesättigter oder olefinisch ungesättigter Kohlenwasserstoffrest mit 1 bis 17 C-Atomen, bevorzugt eine Methylgruppe ist, oder ein aromatischer Kohlenwasserstoffrest mit 6 bis 20 C-Atomen, bevorzugt ein Phenylrest ist, oder
der Rest der Formel -C(=O)-O-ZC ist, wobei ZC ein organischer Rest, bevorzugt ein linearer oder verzweigter, gesättigter oder olefinisch ungesättigter Kohlenwasserstoffrest mit 1 bis 18 C-Atomen, bevorzugt eine Methyl-, Ethylgruppe ist, oder ein aromatischer Kohlenwasserstoffrest mit 6 bis 20 C-Atomen, bevorzugt ein Phenylrest,
m gleich 0 bis zu 50, bevorzugt 0 bis zu 30, besonders bevorzugt 0 bis zu 20 ist
n gleich 0 bis zu 250, bevorzugt 3 bis zu 220, besonders bevorzugt 5 bis zu 200 ist
o gleich 0 bis zu 250, bevorzugt 3 bis zu 220, besonders bevorzugt 5 bis zu 200 ist
a gleich 1 bis zu 8, bevorzugt größer 1 bis zu 6, besonders bevorzugt 1, 2, 3 oder 4,
mit der Maßgabe, dass die Summe aus m, n und o gleich oder größer als 1 ist,
eingesetzt. Vorzugsweise werden Verbindungen der Formel (VI) verwendet, die ausschließlich Wasserstoffatome, Sauerstoffatome und Kohlenstoffatome aufweisen.

8. Verfahren nach zumindest einem der Ansprüche 1 bis 7, **dadurch gekennzeichnet, dass** die Umesterung der Alkoxysiloxane ohne Einsatz von Lösungsmitteln durchgeführt wird.

9. Verfahren nach zumindest einem der Ansprüche 1 bis 7, **dadurch gekennzeichnet, dass** die Umesterung der Alkoxysiloxane in einem unter Reaktionsbedingungen inerten Lösungsmittel durchgeführt wird, wobei bevorzugte Lösungsmittel Toluol und/oder die reinen oder als Isomerengemisch vorliegenden Xylole sind, und wobei diese Lösungsmittel bevorzugt in Gesamtmengen von 5 bis 35 Gew.-%, vorzugsweise 10 bis 35 Gew.-%, bezogen auf die Masse der Reaktionsmatrix eingesetzt werden, und wobei der Gesamtwassergehalt der Lösungsmittel $\leq 50$ Massen-ppm, vorzugsweise $\leq 25$ Massen-ppm, besonders bevorzugt $\leq 10$ Massen-ppm beträgt, wobei die Bestimmung des Wassergehaltes durch Titration nach Karl Fischer erfolgt.

10. Verfahren nach einem der Ansprüche 1 bis 9, **dadurch gekennzeichnet, dass** die Umesterungsreaktion im Temperaturbereich von 110 bis 150°C durchgeführt wird.

11. Verfahren nach zumindest einem der Ansprüche 1 bis 10, **dadurch gekennzeichnet, dass** die Umesterungsreaktion bei vermindertem Druck und unter Durchleiten eines Inertgases durchgeführt wird.

12. Verwendung der nach zumindest einem der Ansprüche 1 bis 11 hergestellten, SiOC-verknüpften Polyethersiloxane, deren Polyetherteil sich aus der Alkoxylierung ungesättigter Startalkohole, bevorzugt von Allylalkohol, herleitet als Entschäumer und/oder Entlüfter sowie als Entschäumer- und/oder Entlüfter-Komponente in Lack- und Bindemittelsystemen.

## Claims

1. Process for producing SiOC-bonded polyether siloxanes by transesterification of alkoxysiloxanes with polyetherols in the presence of zinc acetylacetonate as catalyst, wherein the computational total water content of the reactants consisting of alkoxysiloxanes and polyetherols is $\leq 300$ ppm by mass, advantageously $\leq 200$ ppm by mass, preferably

≤ 150 ppm by mass, more preferably ≤ 100 ppm by mass, in particular ≤ 50 ppm by mass, wherein the determination of the individual water contents is performed beforehand, preferably by titration according to Karl Fischer.

2. Process according to Claim 1, **characterized in that** the employed zinc acetylacetonate catalyst conforms to the formula

$$(C_5H_7O_2)_2Zn \times H_2O$$

where x ≤ 1.27, preferably where x ≤ 0.77 and particularly preferably where x ≤ 0.3.

3. Process according to Claim 1 or 2, **characterized in that** the zinc acetylacetonate is employed in amounts of 0.05 to 1.0 percent by weight, preferably 0.07 to 0.8 percent by weight, based on the mass of the reaction matrix consisting of polyetherol and alkoxysiloxane.

4. Process according to at least one of Claims 1 to 3, **characterized in that** the polyetherol is employed in amounts of preferably in each case 0.8 to 2.0 OH-equivalents, particularly preferably 0.8 to 1.3 OH-equivalents, based on every alkoxy group bonded to the silicone skeleton.

5. Process according to at least one of Claims 1 to 4, **characterized in that** the alkoxysiloxanes conform to at least one of the formulae (I) to (V):

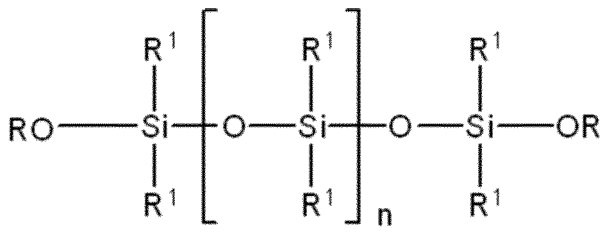

**Formula (I)**

where R1 = alkyl and/or aralkyl and/or aromatic radical comprising 1 to 10 carbon atoms,
R = alkyl radical comprising 1 to 8 carbon atoms and where 1 ≤ n ≤ 250

and/or

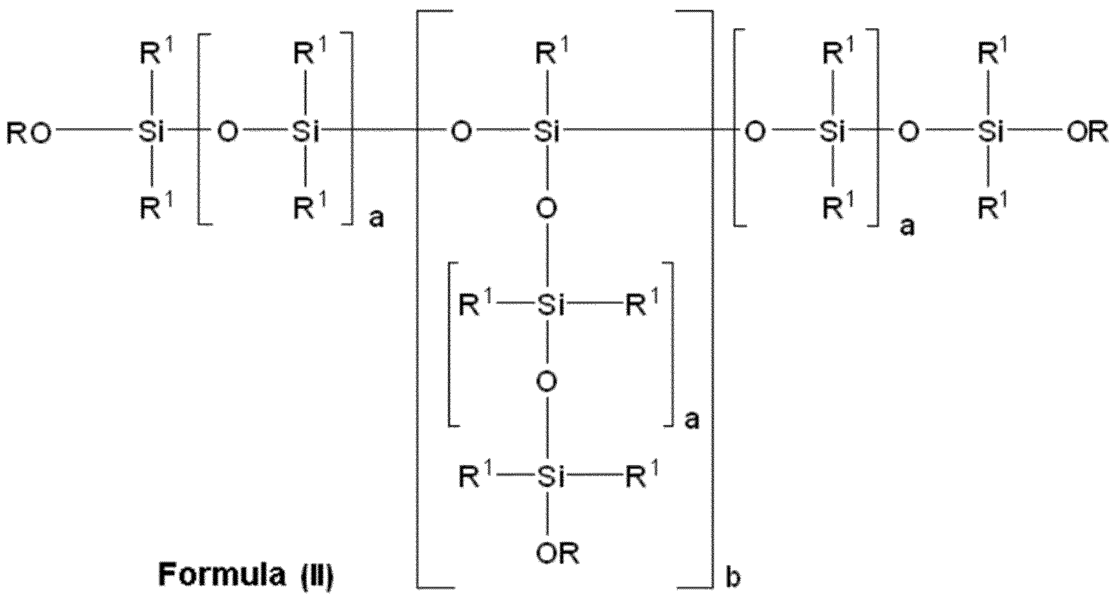

**Formula (II)**

where R1 = alkyl and/or aralkyl and/or aromatic radical comprising 1 to 10 carbon atoms,

R = alkyl radical comprising 1 to 8 carbon atoms and where $1 \leq a \leq 60$ and where $0 < b \leq 10$

and/or

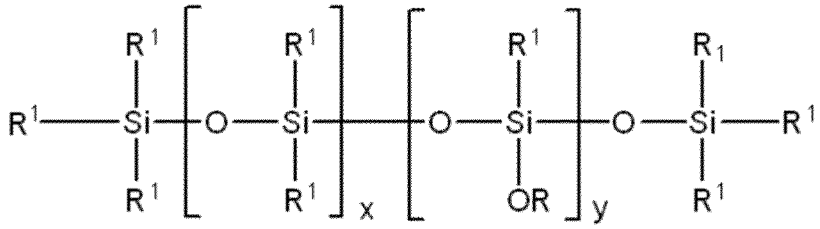

**Formula (III)**

where R1 = alkyl and/or aralkyl and/or aromatic radical comprising 1 to 10 carbon atoms, R = alkyl radical comprising 1 to 8 carbon atoms and where $0 \leq x \leq 250$ and where $1 \leq y \leq 50$

and/or

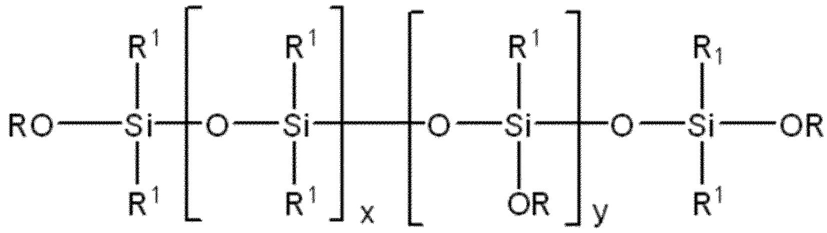

**Formula (IV)**

where R1 = alkyl and/or aralkyl and/or aromatic radical comprising 1 to 10 carbon atoms, R = alkyl radical comprising 1 to 8 carbon atoms and where $0 \leq x \leq 250$ and $1 \leq y \leq 50$

and/or

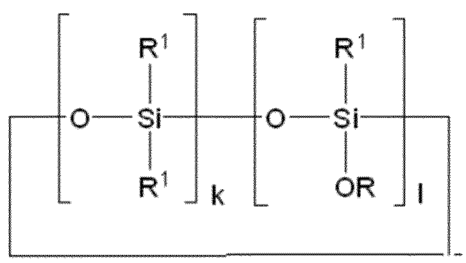

**Formula (V)**

where R1 = alkyl and/or aralkyl and/or aromatic radical comprising 1 to 10 carbon atoms, R = alkyl radical comprising 1 to 8 carbon atoms and where $4 \leq (k + 1) \leq 5$ and $1 \geq 1$.

**6.** Process according to at least one of Claims 1 to 5, **characterized in that** the alkoxysiloxanes are preferably compounds of formula (I) and/or formula (II).

**7.** Process according to at least one of Claims 1 to 6, **characterized in that** the employed polyetherols are preferably those of formula (VI)

$$A[-O-(CH_2-CHR'-O-)_m-(CH_2-CH_2-O-)_n-(CH_2-CH(CH_3)-O-)_o-Z]_a \qquad (VI)$$

where

A is either hydrogen or an at least one carbon atom-comprising saturated or unsaturated organic radical, preferably an at least one carbon atom-comprising organic radical of an organic starter compound for preparing the compound, more preferably a methyl, ethyl, propyl, butyl, vinyl or allyl group,
R' is independently at each occurrence a saturated alkyl group comprising 2-18 carbon atoms or an aromatic radical, preferably an ethyl group or a phenyl radical respectively,
Z is either hydrogen, a linear or branched, saturated or unsaturated hydrocarbon radical comprising 1-18 carbon atoms, preferably a methyl, ethyl, propyl, butyl, vinyl or allyl group, or
the radical of an organic acid of formula -C(=O)-ZE, wherein ZE is an organic radical, preferably a linear or branched, saturated or olefinically unsaturated hydrocarbon radical comprising 1 to 17 carbon atoms, preferably a methyl group, or an aromatic hydrocarbon radical comprising 6 to 20 carbon atoms, preferably a phenyl radical, or
the radical of formula -C(=O)-O-ZC, wherein ZC is an organic radical, preferably a linear or branched, saturated or olefinically unsaturated hydrocarbon radical comprising 1 to 18 carbon atoms, preferably a methyl group, ethyl group, or an aromatic hydrocarbon radical comprising 6 to 20 carbon atoms, preferably a phenyl radical,
m = from 0 to 50, preferably from 0 to 30, particularly preferably from 0 to 20,
n = from 0 to 250, preferably from 3 to 220, particularly preferably from 5 to 200,
o = from 0 to 250, preferably from 3 to 220, particularly preferably from 5 to 200,
a = from 1 to 8, preferably from greater than 1 to 6, particularly preferably 1, 2, 3 or 4,
with the proviso that the sum of m, n and o is equal to or greater than 1.

It is preferable to employ compounds of formula (VI) comprising exclusively hydrogen atoms, oxygen atoms and carbon atoms.

**8.** Process according to at least one of Claims 1 to 7, **characterized in that** the transesterification of the alkoxysiloxanes is performed without the use of solvents.

**9.** Process according to at least one of Claims 1 to 7, **characterized in that** the transesterification of the alkoxysiloxanes is performed in a solvent inert under reaction conditions, wherein preferred solvents are toluene and/or xylenes in pure form or as an isomer mixture and wherein these solvents are preferably employed in total amounts of 5% to 35% by weight, preferably 10% to 35% by weight, based on the mass of the reaction matrix and wherein the total water content of the solvents is ≤ 50 ppm by mass, preferably ≤ 25 ppm by mass, particularly preferably ≤ 10 ppm by mass, wherein the determination of the water content is performed by titration according to Karl Fischer.

**10.** Process according to one of Claims 1 to 9, **characterized in that** the transesterification reaction is performed in a temperature range of 110°C to 150°C.

**11.** Process according to at least one of Claims 1 to 10, **characterized in that** the transesterification reaction is performed at reduced pressure and with passing through of an inert gas.

**12.** Use of the SiOC-bonded polyether siloxanes produced according to at least one of Claims 1 to 11 whose polyether portion is derived from the alkoxylation of unsaturated starter alcohols, preferably from allyl alcohol, as defoamers and/or deaerators and also as defoamer and/or deaerator components in paint and binder systems.

## Revendications

**1.** Procédé de fabrication de polyéther-siloxanes à liaison SiOC par transestérification d'alcoxysiloxanes avec des polyétherols en présence d'acétylacétonate de zinc en tant que catalyseur, la teneur en eau totale calculée des réactifs, constitués par des alcoxysiloxanes et des polyétherols étant ≤ 300 ppm en masse, avantageusement ≤ 200 ppm en masse, de préférence ≤ 150 ppm en masse, de manière davantage préférée ≤ 100 ppm en masse, notamment ≤ 50 ppm en masse, la détermination des teneurs en eau individuelles ayant lieu auparavant, de préférence par titrage selon Karl Fischer.

2. Procédé selon la revendication 1, **caractérisé en ce que** le catalyseur d'acétylacétonate de zinc utilisé satisfait la formule :

$$(C_5H_7O_2)_2Zn \times H_2O$$

avec $x \leq 1{,}27$, de préférence avec $x \leq 0{,}77$ et de manière particulièrement préférée avec $x \leq 0{,}3$.

3. Procédé selon la revendication 1 ou 2, **caractérisé en ce que** l'acétylacétonate de zinc est utilisé en quantités de 0,05 à 1,0 pour cent en poids, de préférence 0,07 à 0,8 pour cent en poids, par rapport à la masse de la matrice réactionnelle constituée par du polyétherol et de l'alcoxysiloxane.

4. Procédé selon au moins l'une quelconque des revendications 1 à 3, **caractérisé en ce que** le polyétherol est utilisé en quantités de préférence respectivement de 0,8 à 2,0 équivalents d'OH, de manière particulièrement préférée 0,8 à 1,3 équivalent d'OH, par rapport à chaque groupe alcoxy relié au squelette de silicone.

5. Procédé selon au moins l'une quelconque des revendications 1 à 4, **caractérisé en ce que** les alcoxysiloxanes satisfont au moins une des formules (I) à (V) :

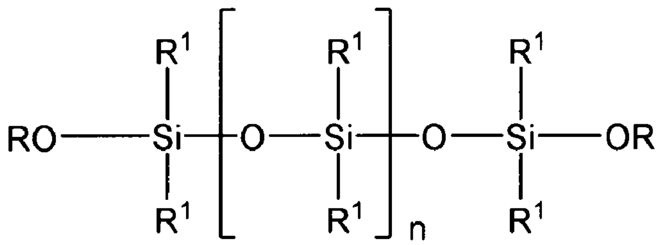

Formule (I)

avec $R^1$ représentant un radical alkyle et/ou aralkyle et/ou aromatique, comprenant 1 à 10 atomes C,
R représentant un radical alkyle, comprenant 1 à 8 atomes C, et
avec $1 \leq n \leq 250$,

et/ou

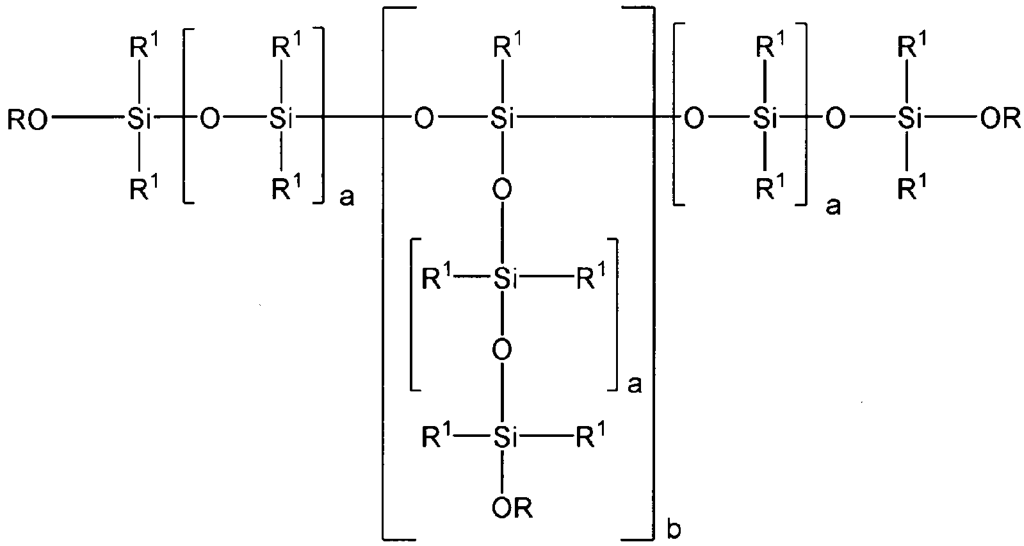

Formule (II)

avec $R^1$ représentant un radical alkyle et/ou aralkyle et/ou aromatique, comprenant 1 à 10 atomes C, R représentant un radical alkyle, comprenant 1 à 8 atomes C, et
avec $1 \leq a \leq 60$ et
avec $0 < b \leq 10$

et/ou

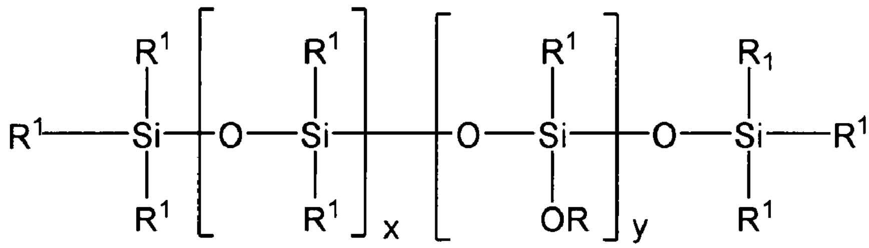

Formule (III)

avec $R^1$ représentant un radical alkyle et/ou aralkyle et/ou aromatique, comprenant 1 à 10 atomes C, R représentant un radical alkyle, comprenant 1 à 8 atomes C, et
avec $0 \leq x \leq 250$ et
avec $1 \leq y \leq 50$

et/ou

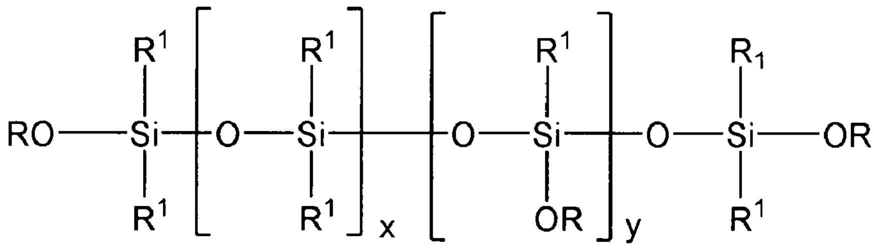

Formule (IV)

avec $R^1$ représentant un radical alkyle et/ou aralkyle et/ou aromatique, comprenant 1 à 10 atomes C, R représentant un radical alkyle, comprenant 1 à 8 atomes C, et
avec $0 \leq x \leq 250$ et
avec $1 \leq y \leq 50$

et/ou

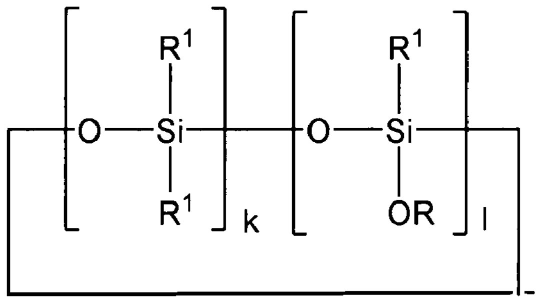

Formule (V)

avec $R^1$ représentant un radical alkyle et/ou aralkyle et/ou aromatique, comprenant 1 à 10 atomes C, R représentant un radical alkyle, comprenant 1 à 8 atomes C, et
avec $4 \leq (k+1) \leq 5$ et
avec $1 \geq 1$.

6. Procédé selon au moins l'une quelconque des revendications 1 à 5, **caractérisé en ce que** les alcoxysiloxanes sont de préférence des composés de la formule (I) et/ou de la formule (II).

7. Procédé selon au moins l'une quelconque des revendications 1 à 6, **caractérisé en ce que** les polyétherols utilisés sont de préférence ceux de la formule (VI)

$$A[-O-(CH_2-CHR'-O-)_m-(CH_2-CH_2-O-)_n-(CH_2-CH(CH_3)-O-)_o-Z]_a \qquad (VI)$$

avec

A représentant l'hydrogène ou un radical organique saturé ou insaturé comprenant au moins un atome de carbone, de préférence un radical organique comprenant au moins un atome de carbone d'un composé de départ organique pour la préparation du composé, de manière particulièrement préférée un groupe méthyle, éthyle, propyle, butyle, vinyle ou allyle,
les R' étant indépendamment les uns des autres un groupe alkyle saturé de 2 à 18 atomes C ou un radical aromatique, respectivement de préférence un groupe éthyle ou un radical phényle,
Z représentant l'hydrogène, un radical hydrocarboné linéaire ou ramifié, saturé ou insaturé, de 1 à 18 atomes C, de préférence un groupe méthyle, éthyle, propyle, butyle, vinyle ou allyle, ou
le radical d'un acide organique de la formule -C(=O)-ZE, ZE étant un radical organique, de préférence un radical

hydrocarboné linéaire ou ramifié, saturé ou oléfiniquement insaturé, de 1 à 17 atomes C, de préférence un groupe méthyle, ou un radical hydrocarboné aromatique de 6 à 20 atomes C, de préférence un radical phényle, ou le radical de la formule -C(=O)-O-ZC, ZC étant un radical organique, de préférence un radical hydrocarboné linéaire ou ramifié, saturé ou oléfiniquement insaturé, de 1 à 18 atomes C, de préférence un groupe méthyle, éthyle, ou un radical hydrocarboné aromatique de 6 à 20 atomes C, de préférence un radical phényle,
m valant 0 à 50, de préférence 0 à 30, de manière particulièrement préférée 0 à 20,
n valant 0 à 250, de préférence 3 à 220, de manière particulièrement préférée 5 à 200,
o valant 0 à 250, de préférence 3 à 220, de manière particulièrement préférée 5 à 200,
a valant 1 à 8, de préférence plus de 1 à 6, de manière particulièrement préférée 1, 2, 3 ou 4,
à condition que la somme de m, n et o soit supérieure ou égale à 1,
de préférence des composés de la formule (VI), qui comprennent exclusivement des atomes d'hydrogène, des atomes d'oxygène et des atomes de carbone.

**8.** Procédé selon au moins l'une quelconque des revendications 1 à 7, **caractérisé en ce que** la transestérification des alcoxysiloxanes est réalisée sans utiliser de solvants.

**9.** Procédé selon au moins l'une quelconque des revendications 1 à 7, **caractérisé en ce que** la transestérification des alcoxysiloxanes est réalisée dans un solvant inerte dans les conditions de réaction, des solvants préférés étant le toluène et/ou les xylènes purs ou présents sous la forme d'un mélange d'isomères, et ces solvants étant de préférence utilisés en quantités totales de 5 à 35 % en poids, de préférence de 10 à 35 % en poids, par rapport à la masse de la matrice réactionnelle, et la teneur en eau totale des solvants étant ≤ 50 ppm en masse, de préférence ≤ 25 ppm en masse, de manière particulièrement préférée ≤ 10 ppm en masse, la détermination de la teneur en eau ayant lieu par titrage selon Karl Fischer.

**10.** Procédé selon au moins l'une quelconque des revendications 1 à 9, **caractérisé en ce que** la réaction de transestérification est réalisée dans la plage de température allant de 110 à 150 °C.

**11.** Procédé selon au moins l'une quelconque des revendications 1 à 10, **caractérisé en ce que** la réaction de transestérification est réalisée à pression réduite et avec passage d'un gaz inerte.

**12.** Utilisation des polyéther-siloxanes à liaison SiOC fabriqués selon au moins l'une quelconque des revendications 1 à 11, dont la partie polyéther dérive de l'alcoxylation d'alcools de départ insaturés, de préférence d'alcool allylique, en tant qu'antimousse et/ou aérateur, ainsi qu'en tant que composant antimousse et/ou aérateur dans des systèmes de vernis et de liant.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0986527 B1
- WO 2011060050 A1
- WO 2015039837 A1
- EP 2636696 A1
- EP 0638605 A1
- US 6489500 B2
- US 2917480 A
- US 2834748 A
- US 3133111 A
- US 3801616 A
- US 4408031 A
- EP 1136494 A2
- EP 1174467 B1
- EP 0075703 A
- US 3775452 A
- EP 1031603 A
- US 5158922 A
- EP 0654302 A


### In der Beschreibung aufgeführte Nicht-Patentliteratur


- **KIMIJAS SERIJA.** *Latvijas PSR Zinatnu Akademijas Vestis,* 1975, vol. 2, 186-8
- *Deutsche Einheitsmethoden zur Untersuchung von Fetten, Fettprodukten, Tensiden und verwandten Stoffen*